# EUROPÄISCHE PATENTANMELDUNG

(11) **EP 4 571 974 A1**
(43) Veröffentlichungstag der Anmeldung: **18.06.2025**
(21) Anmeldenummer: 24218713.6
(22) Anmeldetag: 10.12.2024
(51) Int. Cl.: H01M 50/24, H01M 50/247, H01M 50/35

(54) **TRANSPORTBEHÄLTER MIT EINER SCHUTZEINRICHTUNG ZUM TRANSPORT EINES TRANSPORTGUTS**

(30) Priorität: 11.12.2023 DE 102023134555
(71) Anmelder: Andreas Stihl AG & Co. KG, 71336 Waiblingen (DE)
(72) Erfinder: Bay, Jeffrey, 73230 Kirchheim unter Teck (DE)
(74) Vertreter: v. Bezold & Partner Patentanwälte - PartG mbB

(57) **Zusammenfassung**

Die Erfindung betrifft ein Transportbehälter (1) mit einem Innenraum (2) zur Aufnahme eines Transportguts (3), umfassend: • eine Behälterwand (11) mit zumindest einer Behälteröffnung (20) zur Versorgung des Innenraums (2) mit Luft (L) einer Umgebung (U); • zumindest eine Schutzeinrichtung (30) zur Abschirmung der zumindest einen Behälteröffnung (20) gegen ein Medium (M) der Umgebung (U), welches insbesondere flüssig, flüssig tropfenförmig, flüssig partikelhaltig und/oder kristallförmig ist; wobei die zumindest eine Schutzeinrichtung (30) einen Lufteinlassbereich (31) zur Beeinflussung eines Luftstroms (LS) der Luft (L) zu der zumindest einen Behälteröffnung (20) umfasst, wobei sich der Lufteinlassbereich (31) in einer Umfangsrichtung (U30) um die zumindest eine Behälteröffnung (20) herum erstreckt und konfiguriert ist, entlang der Umfangsrichtung (U30) das Medium (M) abzuleiten.

## Beschreibung

Die vorliegende Erfindung liegt auf dem Gebiet der Transporttechnik und betrifft einen Transportbehälter mit einem Innenraum zur Aufnahme eines Transportguts. Zur Versorgung des Innenraums mit Luft einer Umgebung umfasst der Transportbehälter zumindest eine Behälteröffnung. Zur Abschirmung der zumindest einen Behälteröffnung gegen schädliche Medien der Umgebung umfasst der Transportbehälter zumindest eine Schutzeinrichtung, welche an der zumindest einen Behälteröffnung angeordnet ist. Die zumindest eine Schutzeinrichtung ist vor allem konfiguriert, in einer beliebigen Lage des Transportbehälters und somit in einer beliebigen Position und/oder in einer beliebigen Ausrichtung einen effektiven Schutz des Innenraums bei gleichzeitiger Belüftung des Innenraums zu gewährleisten. Der Transportbehälter gemäß der vorliegenden Erfindung ist vor allem für einen Transportgut in Form zumindest einer elektrischen Komponente konfiguriert.

Zum Transport eines Transportguts kommen Transportbehälter in unterschiedlichsten Ausbildungen und Konfigurationen zum Einsatz. Eine Hauptaufgabe des Transportbehälters ist, das Transportgut vor schädlichen äußeren Einflüssen zu schützen. Je nach Art des Transportguts ist eine weitere Aufgabe des Transportbehälters die Gewährleistung von Sicherheit, insbesondere dann, wenn es sich bei dem Transportgut um elektrische Komponenten und Geräte handelt.

Beispielsweise müssen zum Transport von elektrischen Ladegeräten und Akkumulatoren besondere Einrichtungen an dem und in dem Transportbehälter vorhanden sein, um vor allem eine Versorgung des Innenraums mit Luft einer Umgebung zu gewährleisten. Allerdings muss in jedem Fall sichergestellt werden, dass beispielsweise keine schädlichen flüssigen Medien in Form von Wassertropfen, Gischt oder Spritzwasser in den Transbehälter gelangen.

Aus der Patentliteratur des Stands der Technik sind hierzu verschiedene Ansätze bekannt.

So betrifft beispielsweise das japanische Patentdokument Nr. JP 2012-81879 A eine Transportstruktur mit einer Ladegerätkammer zur Aufnahme eines Ladegeräts und mit einer Batterieaufnahmekammer zur Aufnahme einer Batterie. Die Transportstruktur ist seitlich an einen Rahmen eines Müllsammelfahrzeugs montiert. Um sowohl das Ladegerät als auch die Batterie in Abhängigkeit einer Umgebungstemperatur zu kühlen, verfügt die Transportstruktur über eine Einlassöffnung zum Einleiten von Außenluft in die Ladegerätkammer sowie über eine Auslassöffnung in der Batterieaufnahmekammer zum Ausleiten der Luft. Ein Kühlgebläse ist innerhalb der Transportstruktur angeordnet und dient zum Ansaugen von Luft aus der Umgebung über die Einlassöffnung. Um das Eindringen von Feuchtigkeit in Form von Wassertropfen zu verhindern, ist an den Öffnungen jeweils ein Abdeckblech angeordnet, welches eine zum Boden hin gerichtete Öffnung ausbildet. Um das Ladegerät vor Regenwasser oder Waschwasser zu schützen, ist innerhalb der Ladegerätkammer hinter der Einlassöffnung und vor dem Ladegerät eine verschiebbare Trennwand ausgebildet.

Zum weiteren bekannten Stand der Technik wird auf die Druckschriften EP 4 037 136 A1, CN 217983476 U, CN 218274933 U, DE 199 29 899 A1 und US 2004/0108150 A1 verwiesen.

Es ist eine Aufgabe der vorliegenden Erfindung, einen Transportbehälter mit einem Innenraum zur Aufnahme eines Transportguts bereitzustellen, bei welchem eine Belüftung des Innenraums realisiert ist und bei Gewährleistung der Belüftung ein Schutz gegen schädliche Medien der Umgebung verbessert ist.

Die Aufgabe wird durch die Merkmale des unabhängigen Anspruchs 1 gelöst. Weitere Ausführungsbeispiele und Anwendungen der vorliegenden Erfindung ergeben sich aus den abhängigen Ansprüchen und werden in der folgenden Beschreibung unter teilweiser Bezugnahme auf die Figuren näher erläutert.

Die vorliegende Erfindung betrifft nach einem ersten allgemeinen Gesichtspunkt einen Transportbehälter mit einem Innenraum zur Aufnahme eines Transportguts, umfassend: • eine Behälterwand mit zumindest einer Behälteröffnung zur Versorgung des Innenraums mit Luft einer Umgebung; • zumindest eine Schutzeinrichtung zur Abschirmung der zumindest einen Behälteröffnung gegen ein Medium der Umgebung, welches insbesondere flüssig, flüssig tropfenförmig, flüssig partikelhaltig und/oder kristallförmig ist; wobei die zumindest eine Schutzeinrichtung einen Lufteinlassbereich zur Beeinflussung eines Luftstroms der Luft zu der zumindest einen Behälteröffnung umfasst, wobei sich der Lufteinlassbereich in einer Umfangsrichtung um die zumindest eine Behälteröffnung herum erstreckt und konfiguriert ist, entlang der Umfangsrichtung das Medium im Wesentlichen abzuleiten.

Das Medium kann ein für das Transportgut schädliches Medium sein. Wenn das Transportgut beispielsweise eine elektrische Komponente in Form eines Ladegeräts und/oder eines Akkumulators ist, muss der Innenraum des Transportbehälters grundsätzlich gegen Wasser als schädliches Medium geschützt werden. Die zumindest eine Schutzeinrichtung bietet beispielsweise zunächst einen grundsätzlichen Schutz gegen ein Medium in Form von Spritzwasser und Regenwasser (jeweils tropfenförmiges Wasser) sowie Schnee (Wasser in einem mehr oder weniger kristallinen Zustand).

Durch die vorliegende Erfindung kann ein Transportbehälter mit einer Belüftungsfunktion bereitgestellt werden, welcher in unterschiedlichen Lagen, das heißt Positionen und/oder Ausrichtungen stets einen hinreichenden Schutz gegen das Eindringen eines schädlichen Mediums in den Innenraum bietet. Mit dem Transportbehälter gemäß der vorliegenden Erfindung ist es möglich, das Medium um die zumindest eine Behälteröffnung herum und somit über einen Winkelbereich von 360 Grad abzuleiten. Der Transportbehälter kann somit in einer exponierten Lage angeordnet sein und dennoch einen effektiven Schutz gegen das Eindringen des Mediums aus unterschiedlichen Richtungen in den Innenraum ermöglichen.

Gemäß einem weiteren Aspekt der vorliegenden Erfindung kann vorgesehen sein, dass der Lufteinlassbereich konfiguriert ist, das Medium, insbesondere das flüssig tropfenförmige und/oder flüssig partikelhaltige Medium, von dem Luftstrom im Wesentlichen abzuscheiden und insbesondere das abgeschiedene Medium an der zumindest einen Schutzeinrichtung in einer definierten Richtung zu führen.

Dadurch kann ein Transportbehälter mit einer Abscheidefunktion bereitgestellt werden, welcher bei einem erzeugten und/oder einem ausgebildeten und/oder einem auftretenden Luftstrom zur Belüftung des Innenraums ebenfalls einen effektiven Schutz gegen das Medium bildet, in dem das Medium in dem und/oder an dem Lufteinlassbereich im Wesentlichen abgeschieden und im Weiteren abgeleitet wird. Das Medium kann beispielsweise Wasser in Tropfenform und/oder in zerstäubter Form sein (beispielsweise Gischt, Sprühnebel). Zusätzlich oder alternativ kann das Medium ein Dispersionsmedium sein, insbesondere in Form einer Suspension als heterogenes Stoffgemisch mit ungelösten Feststoffpartikeln in einem flüssigen Medium (beispielsweise Wasser mit groben Feststoffpartikeln).

Der Luftstrom kann aktiv durch ein Gebläse in dem Innenraum des Transportbehälters erzeugt sein und/oder zumindest daraus resultieren, um eine Belüftung für ein Transportgut, beispielsweise in

Form zumindest einer elektrischen Komponente, zu realisieren. Ein gleichzeitiges Eindringen eines (angesaugten) Mediums in dem Luftstrom kann im Wesentlichen verhindert werden.

Zusätzlich oder alternativ kann der Luftstrom in Bezug auf den Transportbehälter passiv erzeugt sein, wenn der Transportbehälter beispielsweise auf einer Ladepritsche eines Pritschenwagens in einer exponierten Lage montiert ist und der Pritschenwagen und somit der Transportbehälter infolge einer Bewegung des Pritschenwagens mit einem Gemisch aus Luftstrom und Medium umströmt wird.

Es ist möglich, dass der Lufteinlassbereich vollständig umlaufend ausgebildet ist; und/oder dass der Lufteinlassbereich zumindest eine Einlassöffnung umfasst und/oder mit der Behälterwand ausbildet, wobei die zumindest eine Einlassöffnung schlitzförmig oder spaltförmig ausgebildet ist, insbesondere mit einer im Wesentlichen konstanten Schlitzbreite oder mit einer im Wesentlichen konstanten Spaltbreite.

Durch eine schlitzförmige oder spaltförmige Ausbildung des Lufteinlassbereichs kann beispielsweise die Abscheidefunktion weiter verbessert werden.

Gemäß einem weiteren Gesichtspunkt der vorliegenden Erfindung kann vorgesehen sein, dass der Lufteinlassbereich in Form eines Labyrinths ausgebildet ist, welches sich in der Umfangsrichtung um die zumindest eine Behälteröffnung herum erstreckt, insbesondere vollständig umlaufend erstreckt, um den Luftstrom abschnittsweise zumindest einmal im Wesentlichen parallel zu der Behälterwand und/oder abschnittsweise zumindest einmal im Wesentlichen senkrecht zu der Behälterwand zu führen.

Die Ausbildung des Lufteinlassbereichs in Form eines Labyrinths mit zumindest einer Umlenkung des Luftstroms kann ebenfalls die Abscheidefunktion für schädliches Medium verbessern, sodass ein Eindringen in den Innenraum im Wesentlichen verhindert wird.

Es ist möglich, dass der Lufteinlassbereich zur Umlenkung des Luftstroms zumindest eine erste Kante und zumindest eine zweite Kante umfasst, welche voneinander beabstandet und/oder zueinander gegenüberliegend und/oder zueinander versetzt beabstandet ausgebildet sind, wobei insbesondere die zumindest eine erste Kante und/oder die zumindest eine zweite Kante jeweils als eine Kante ausgebildet ist, bei welchem ein jeweiliger Kantenwinkel im Wesentlichen gleich oder kleiner als 110 Grad ist.

Der Kantenwinkel kann ein resultierender und/oder ein messbarer Kantenwinkel sein. Die zumindest eine erste Kante und/oder die zumindest eine zweite Kante kann jeweils durch zwei angrenzende und/oder abgrenzbare Flächen, welche jeweils insbesondere im Wesentlichen eben ausgebildet sind, gebildet werden. Es ist alternativ möglich, dass die zumindest eine erste Kante und/oder die zumindest eine zweite Kante durch zwei angrenzende gewölbte Flächen gebildet wird.

Gemäß einem weiteren Aspekt der vorliegenden Erfindung kann vorgesehen sein, dass die zumindest eine erste Kante und die zumindest eine zweite Kante zueinander beabstandet und in unterschiedlichen Lagen zueinander angeordnet sind, um in einer Querschnittsansicht eine Z-förmige Umlenkung des Luftstroms zu bilden.

Mit anderen Worten können die zumindest eine erste Kante und die zumindest eine zweite Kante zueinander angeordnet und/oder ausgebildet sein, sodass sich in einer Querschnittsansicht eine resultierende Strömungsrichtung des Luftstroms ergibt, welche Z-förmig ist. Dadurch kann beispielsweise ein Abscheiden schädlichen Mediums von dem Luftstrom weiter optimiert werden.

Es ist möglich, dass der Lufteinlassbereich in einer Strömungsrichtung des Luftstroms abschnittsweise düsenförmig ausgebildet ist, um den Luftstrom zu der zumindest einen Behälteröffnung zu beschleunigen und/oder um den Luftstrom zu der zumindest einen Behälteröffnung abzubremsen.

Eine düsenförmige Ausbildung kann eine Vergrößerung eines resultierenden Strömungsquerschnitts und/oder eine Verkleinerung eines resultieren Strömungsquerschnitts entlang einer Strömungsrichtung umfassen.

Gemäß einem weiteren Gesichtspunkt der vorliegenden Erfindung kann vorgesehen sein, dass der Lufteinlassbereich einen Ableitabschnitt für das Medium umfasst, welcher teilweise an die Behälterwand angrenzt und/oder welcher teilweise zu der Behälterwand gegenüberliegend angeordnet ist, um das Medium im Wesentlichen in einer definierten Richtung abzuführen.

Es ist möglich, dass der Ableitabschnitt als eine umlaufende Kante, als eine umlaufende Rinne, als ein umlaufender Absatz, als ein umlaufender Kanal, und/oder als ein umlaufender Schacht ausgebildet ist, und/oder jeweils zumindest eine/n solche/n umfasst.

Der Ableitabschnitt erstreckt sich insbesondere um die zumindest eine Behälteröffnung herum.

Gemäß einem weiteren Aspekt der vorliegenden Erfindung kann vorgesehen sein, dass die zumindest eine Schutzeinrichtung zur Montage an die Behälterwand abschnittsweise ringförmig oder abschnittsweise ringscheibenförmig mit jeweils einer Durchgangsöffnung ausgebildet ist, wobei insbesondere in einer Strömungsrichtung des Luftstroms die Durchgangsöffnung an die zumindest eine Behälteröffnung im Wesentlichen bündig angrenzt oder über zumindest einen Absatz, insbesondere über zumindest einen umlaufenden Absatz, in die zumindest eine Behälteröffnung übergeht.

Dadurch kann beispielsweise eine vergleichsweise niedrige Bauhöhe der zumindest einen Schutzeinrichtung an der Außenseite der Behälterwand realisiert werden.

Es ist möglich, dass die zumindest eine Schutzeinrichtung zu zumindest einer Ebene im Wesentlichen symmetrisch ausgebildet ist.

Die zumindest eine Schutzeinrichtung kann zu zumindest einer Mittelebene im Wesentlichen spiegelsymmetrisch ausgebildet sein. Die zumindest eine Mittelebene kann eine definierte oder eine definierbare Mittelebene sein.

Gemäß einem weiteren Aspekt der vorliegenden Erfindung kann vorgesehen sein, dass die zumindest eine Schutzeinrichtung einteilig, insbesondere integral einstückig, mit einem Rahmenteil und mit einem Abschirmteil oder zumindest zweiteilig mit einem Rahmenelement und mit einem Abschirmelement ausgebildet ist, wobei das Rahmenelement und das Abschirmelement jeweils als separate Einzelelemente ausgebildet sind, wobei sich, insbesondere in einem Montagezustand, jeweils der Abschirmteil oder das Abschirmelement beabstandet zu der Behälterwand zumindest über das Rahmenteil oder über das Rahmenelement erstreckt.

Der Montagezustand kann ein Zustand sein, bei welchem die zumindest eine Schutzeinrichtung an den Transportbehälter montiert ist, um eine ordnungsgemäße und/oder bestimmungsgemäße Funktion zu erfüllen.

Gemäß einem weiteren Gesichtspunkt der vorliegenden Erfindung kann vorgesehen sein, dass die zumindest eine Behälteröffnung durch einen Querschnitt gekennzeichnet ist, und dass der Rahmenteil oder das Rahmenelement jeweils eine Durchgangsöffnung umfasst, welche zu dem Querschnitt der zumindest einen Behälteröffnung im Wesentlichen identisch oder zumindest ähnlich ausgebildet ist.

Die zumindest eine Behälteröffnung kann durch einen im Wesentlichen kreisförmigen oder ovalen Querschnitt gekennzeichnet sein.

Es ist möglich, dass der Rahmenteil oder das Rahmenelement, und/oder dass der Abschirmteil oder das Abschirmelement jeweils abschnittsweise im Wesentlichen flach und/oder abschnittsweise im Wesentlichen plattenförmig ausgebildet ist; und/oder dass der Abschirmteil oder das Abschirmelement zur Begrenzung des Lufteinlassbereichs im Wesentlichen flach und schalenförmig, oder im Wesentlichen flach und wannenförmig ausgebildet ist.

Dadurch kann ein Transportbehälter bereitgestellt werden, welcher durch zumindest eine Schutzeinrichtung mit vergleichsweise geringer Bauhöhe gekennzeichnet ist.

Gemäß einem weiteren Gesichtspunkt der vorliegenden Erfindung kann vorgesehen sein, dass der Rahmenteil oder das Rahmenelement jeweils einen umlaufenden Ableitabschnitt für das Medium umfasst, und dass an dem Abschirmteil oder an dem Abschirmelement jeweils in einer Umfangsrichtung zumindest eine Abdeckleiste angeordnet und/oder ausgebildet ist, wobei, insbesondere in dem Montagezustand, die zumindest eine Abdeckleiste zu einer Seite des Ableitabschnitts gegenüberliegend und/oder beabstandet angeordnet ist.

Die zumindest eine Abdeckleiste kann durch zumindest einen Bördelvorgang hergestellt sein. Die zumindest eine Abdeckleiste kann zur Ableitung des Mediums und/oder zur Abscheidung des Mediums angeordnet und/oder ausgebildet sein.

Es ist möglich, dass der Rahmenteil und der Abschirmteil, oder dass das Rahmenelement und das Abschirmelement jeweils zusammen zumindest zwei Durchflussschächte für den Luftstrom ausbilden, welche in der Umfangsrichtung um die Durchgangsöffnung herum angeordnet sind und in die Durchgangsöffnung münden.

Gemäß einem weiteren Aspekt der vorliegenden Erfindung kann vorgesehen sein, dass das Transportgut zumindest eine elektrische Komponente umfasst und/oder als zumindest eine solche ausgebildet ist, wobei insbesondere das Transportgut ein Ladegerät und/oder zumindest einen Akkumulator umfasst.

Die zuvor beschriebenen Ausführungsbeispiele und Merkmale der vorliegenden Erfindung sind beliebig miteinander kombinierbar. Weitere oder andere Einzelheiten und vorteilhafte Wirkungen der vorliegenden Erfindung werden im Folgenden unter Bezugnahme auf die beigefügten Figuren näher erläutert.

Es zeigen:
- Fig. 1: einen Ausschnitt (Schnittansicht) eines ersten Ausführungsbeispiels des Transportbehälters gemäß der vorliegenden Erfindung;
- Fig. 2: einen weiteren Ausschnitt (teilweise Schnittansicht) des ersten Ausführungsbeispiels des Transportbehälters gemäß der vorliegenden Erfindung;
- Fig. 3A: ein Rahmenelement der Schutzeinrichtung des ersten Ausführungsbeispiels des Transportbehälters gemäß der vorliegenden Erfindung in einer perspektivischen Ansicht;
- Fig. 3B: das Rahmenelement aus Figur 3A in einer Vorderansicht;
- Fig. 4A: ein Abschirmelement der Schutzeinrichtung des ersten Ausführungsbeispiels des Transportbehälters gemäß der vorliegenden Erfindung in einer ersten perspektivischen Ansicht;
- Fig. 4B: das Abschirmelement aus Figur 4A in einer zweiten perspektivischen Ansicht;
- Fig. 5: den Ausschnitt des Transportbehälters aus Figur 1, wobei die im Innenraum des Transportbehälters an der zumindest einen Behälteröffnung angeordnete Strömungsmaschine ausgeblendet ist;
- Fig. 6: den Ausschnitt des Transportbehälters aus Figur 2, wobei die im Innenraum des Transportbehälters an der zumindest einen Behälteröffnung angeordnete Strömungsmaschine ausgeblendet ist;
- Fig. 7: den Transportbehälter gemäß dem ersten Ausführungsbeispiel in einer perspektivischen Ansicht.

Die vorliegende Erfindung ist nicht auf das beschriebene Ausführungsbeispiel beschränkt. Vielmehr ist eine Vielzahl von Varianten und Abwandlungen möglich, die ebenfalls von dem Erfindungsgedanken der vorliegenden Erfindung Gebrauch machen und deshalb in den Schutzbereich fallen. Insbesondere beansprucht die vorliegende Erfindung auch Schutz für den Gegenstand und die Merkmale der Unteransprüche unabhängig von den in Bezug genommenen Ansprüchen.

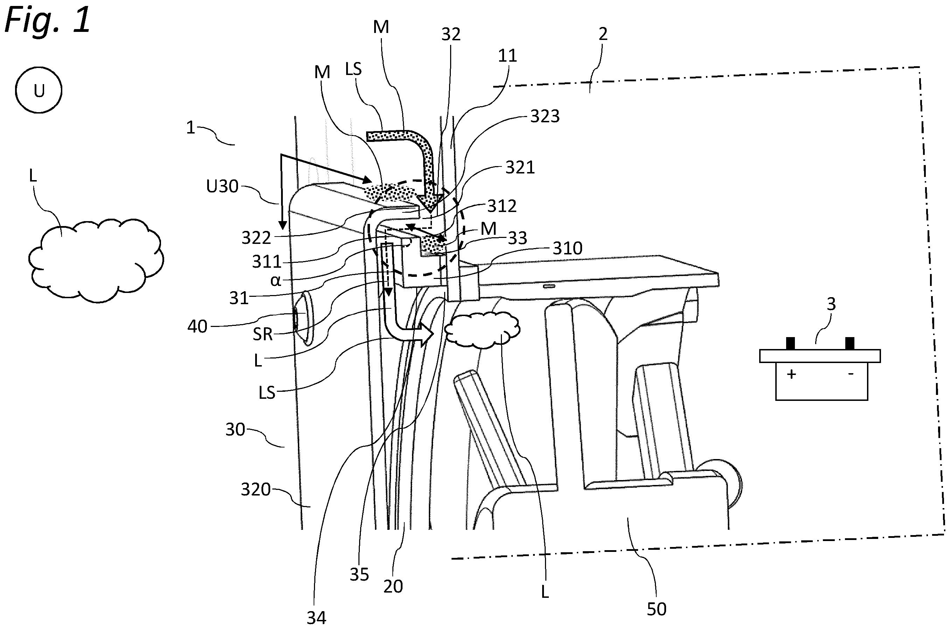

Figur 1 zeigt einen Ausschnitt (Schnittansicht) eines ersten Ausführungsbeispiels des Transportbehälters 1 gemäß der vorliegenden Erfindung.

Der Transportbehälter 1 dient zum Transport eines Transportguts 3 und umfasst hierzu einen Innenraum 2 zur Aufnahme des Transportguts 3. Der Transportbehälter 1 ist vor allem zum Transport eines Transportguts 3 in Form zumindest einer elektrischen Komponente konfiguriert, deren Transport mit speziellen Anforderungen verbunden ist. Die zumindest eine elektrische Komponente kann beispielsweise ein elektrisches Ladegerät und/oder ein Akkumulator und/oder eine Anordnung mehrerer Akkumulatoren sein. Bei einem Transportgut 3 in Form zumindest einer elektrischen Komponente sind vor allem Anforderungen hinsichtlich Sicherheit und Thermomanagement zu erfüllen. Damit einhergehend ist beispielsweise die Gewährleistung einer ausreichenden Belüftung und somit eine hinreichende Versorgung des Innenraums 2 mit Luft L einer Umgebung U.

Bei Gewährleistung der Belüftung muss der Innenraum 2 vor schädlichen Medien M der Umgebung U, wie beispielsweise Wasser in unterschiedlichen Formen, Grobpartikel, Schmutz, Staub, etc., geschützt werden. Um allerdings eine Belüftung des Innenraums 2 realisieren zu können, ist zumindest eine Öffnung an dem Transportbehälter 1 notwendig, sodass ein Austausch von Luft L mit der Umgebung U ermöglicht werden kann.

Der Transportbehälter 1 umfasst eine Behälterwand 11 mit zumindest einer Behälteröffnung 20 zur Versorgung des Innenraums 2 mit Luft L der Umgebung U. Die Behälterwand 11 ist Bestandteil des Transportbehälters 1, welcher mehrere Behälterwände 11 umfasst, um dadurch zum Beispiel auch die Größe und Ausbildung des Innenraums 2 festzulegen.

Der Transportbehälter 1 kann eine Behälterwand 11 in Form eines abnehmbaren oder schwenkbar gelagerten Deckels umfassen, mittels welcher der Transportbehälter 1 geöffnet und/oder geschlossen werden kann. Der Transportbehälter 1 kann zur Montage an einen Rahmen eines Fahrzeugs, beispielsweise eines Nutzfahrzeugs, konfiguriert sein. Der Transportbehälter 1 kann zur Montage auf einer Ladepritsche oder unterhalb einer Ladepritsche eines Pritschenwagens konfiguriert sein. Der Transportbehälter 1 kann beispielsweise quaderförmig ausgebildet sein, wobei alternative Ausbildungen möglich sind. Mit anderen Worten kann der Transportbehälter 1 als Transportkiste oder als Transportbox ausgebildet sein. Die Behälterwand 11 sowie weitere Behälterwände 11 des Transportbehälters 1 können aus einem Werkstoff auf Basis eines Kunststoffs, eines Metalls oder einer Metalllegierung ausgebildet sein. Die Behälterwand 11 sowie weitere Behälterwände 11 des Transportbehälters 1 sind jeweils insbesondere im Wesentlichen flach und/oder im Wesentlichen plattenförmig ausgebildet und daher durch eine im Wesentlichen ebene Außenfläche an der Außenseite des Transportbehälters 1 zu der Umgebung U gekennzeichnet.

Die zumindest eine Behälteröffnung 20 kann einen im Wesentlichen kreisförmigen Querschnitt umfassen. Es ist möglich, dass die zumindest eine Behälteröffnung 20 durch einen anderen Querschnitt gekennzeichnet ist, beispielsweise durch einen ovalen Querschnitt oder durch einen rechteckförmigen Querschnitt. Der Querschnitt ist insbesondere jeweils ein geschlossener Querschnitt.

Um die zumindest eine Behälteröffnung 20 und vor allem den Innenraum 2 vor einem Medium M mit schädlicher Wirkung auf das Transportgut 3 zu schützen, und dennoch eine Versorgung des Innenraums 2 mit Luft L über die zumindest eine Behälteröffnung 20 zu gewährleisten, umfasst der Transportbehälter 1 zumindest eine Schutzeinrichtung 30 zur Abschirmung der zumindest einen Behälteröffnung 20 gegen ein Medium M der Umgebung U, welches flüssig tropfenförmig, flüssig partikelhaltig und/oder kristallin ist.

Die zumindest eine Schutzeinrichtung 30 umfasst einen Lufteinlassbereich 31 zur Beeinflussung eines Luftstroms LS der Luft L zu der zumindest einen Behälteröffnung 20. Der Lufteinlassbereich 31 erstreckt sich in einer Umfangsrichtung U30 um die zumindest eine Behälteröffnung 20 herum. Mit anderen Worten ist der Lufteinlassbereich 31 ein um die zumindest eine Behälteröffnung 20 umlaufender Einlassbereich für Luft L. Der Lufteinlassbereich 31 ist konfiguriert, entlang der Umfangsrichtung U30 das Medium M, insbesondere in Form von Spritzwasser und/oder Regenwasser, abzuleiten, und zwar vor allem in einer definierten und/oder vorgegebenen Richtung. Dadurch kann zunächst ein grundlegender Schutz des Innenraums 2 vor schädlichen Medien M für das Transportgut 3 realisiert werden.

Bei einem Anspritzen des Transportbehälters 1 mit einem Medium M in Form von Spritzwasser kann ein Ableiten und somit ein Wegleiten von der zumindest einen Behälteröffnung 20 realisiert werden.

Zur Ableitung des Mediums M in einer definierten Richtung umfasst der Lufteinlassbereich 31 einen Ableitabschnitt 33 (siehe den eingezeichneten Doppelpfeil im Bereich des Ableitabschnitts 33), welcher teilweise an die Behälterwand 11 angrenzt und/oder welcher teilweise zu der Behälterwand 11 gegenüberliegend angeordnet ist. Der Ableitabschnitt 33 wird unter anderem durch die Kante 312 in Form einer Ableitkante definiert, welche durch einen Absatz mit zwei zueinander angrenzenden Flächen gebildet wird. Die zueinander angrenzenden Flächen sind im Wesentlichen eben und aus Gründen der Übersichtlichkeit in den Figuren nicht gekennzeichnet.

Der Ableitabschnitt 33 kann als ein im Wesentlichen quadratisch umlaufender Ableitabschnitt ausgebildet sein. Es ist möglich, dass alternativ der Ableitabschnitt 33 als ein im Wesentlichen kreisförmig oder oval umlaufender Ableitabschnitt ausgebildet ist. Der Ableitabschnitt 33 kann als eine umlaufende Kante, als eine umlaufende Rinne, als ein umlaufender Absatz, als ein umlaufender Kanal, und/oder als ein umlaufender Schacht ausgebildet sein, und/oder jeweils zumindest eine/n solche/n umfassen. Dadurch kann die Ableitung von einem Medium M, vor allem in Form von Spritzwasser und/oder Regenwasser verbessert werden und somit ein Eindringen in die zumindest eine Behälteröffnung 20 im Wesentlichen verhindert werden.

Der Ableitabschnitt 33 ist bei dem vorliegenden Ausführungsbeispiel des Transportbehälters 1 an einem Rahmenelement 310 angeordnet und/oder ausgebildet. Das Rahmenelement 310 ist Bestandteil der zumindest einen Schutzeinrichtung 30, welche bei diesem Ausführungsbeispiel zumindest zweiteilig und somit mehrteilig ausgebildet ist und neben dem Rahmenelement 310 ein Abschirmelement 320 umfasst. Sowohl das Rahmenelement 310 als auch das Abschirmelement 320 sind jeweils als separates Einzelteil ausgebildet und/oder hergestellt. Es ist möglich, dass die zumindest eine Schutzeinrichtung 30 bei einem alternativen Ausführungsbeispiel des Transportbehälters 1 einteilig und somit integral einstückig ausgebildet ist und einen Abschnitt als Rahmenteil und einen Abschnitt als Abschirmteil umfasst.

Das Rahmenelement 310 und das Abschirmelement 320 werden anhand weiterer Figuren näher beschrieben. Wie sich aus der Darstellung in Figur 1 ergibt, ist das Abschirmelement 320 abschnittsweise im Wesentlichen flach und/oder abschnittsweise im Wesentlichen plattenförmig ausgebildet und umfasst somit eine im Wesentlichen ebene Außenfläche zur Umgebung U und eine im Wesentlichen ebene Innenfläche zur zumindest einen Behälteröffnung 20. Darüber hinaus umfasst das Abschirmelement 320 zumindest eine Abdeckleiste 323, 324, 325, 326, von welcher in Figur 1 die Abdeckleiste 323 sichtbar ist.

Die Innenfläche des Abschirmelements 320 trägt zusammen mit der zumindest einen Abdeckleiste 323, 324, 325, 326, das heißt mit jeweiligen Innenflächen, sowie dem Rahmenelement 310 zur Ausbildung des Strömungswegs und somit der Strömungsrichtung SR des Luftstroms LS bei.

Der Transportbehälter 1 kann zumindest nach dem so genannten IPX4-Standard (International Protection Code), das heißt nach der IPX-Schutzklasse IPX4 konfiguriert sein und/oder zumindest darauf basieren, wobei zumindest ein Schutz gegen ein Medium M in Form von Spritzwasser aus allen Richtungen (allseitiges Spritzwasser) gegeben ist.

Die zumindest eine Schutzeinrichtung 30 ist grundsätzlich konfiguriert, bei einem ausbleibenden oder nicht vorhandenen Luftstrom LS das Medium M entlang der Umfangsrichtung U30 und somit über einen Winkelbereich von 360 Grad abzuleiten. Dies ermöglicht beispielsweise eine Montage des Transportbehälters 1 in unterschiedlichen Lagen, das heißt in unterschiedlichen Positionen und/oder in unterschiedlichen Ausrichtungen.

Die Funktion der Abscheidung kann durch und/oder mittels eines auftretenden Luftstroms LS realisiert werden. Der Luftstrom LS kann aktiv durch eine Strömungsmaschine 50 des Transportbehälters 1, beispielsweise in Form eines Ventilators mit zumindest einem Laufrad, innerhalb des Innenraums 2 des Transportbehälters 1 erzeugt werden, welche in einem Betriebszustand Luft L aus der Umgebung U über die zumindest eine Behälteröffnung 20 ansaugt und somit einen Luftstrom LS an dem und/oder in dem Lufteinlassbereich 31 generiert. Es versteht sich, dass der Transportbehälter 1 zumindest eine weitere Behälteröffnung 20 umfassen kann, um in dem Innenraum 2 bereits enthaltene Luft L aus dem Innenraum 2 abzuführen und somit eine Belüftung zu realisieren. An der zumindest einen weiteren Behälteröffnung 20 kann zumindest eine weitere Schutzeinrichtung 30 wie hierin offenbart angeordnet sein.

Alternativ ist es möglich, dass die Strömungsmaschine 50, welche in dem Innenraum 2 an der zumindest einen Behälteröffnung 20 angeordnet ist, derart betrieben wird, dass die im Innenraum 2 befindliche Luft L angesaugt, verdichtet und über die zumindest eine Behälteröffnung 20 sowie die zumindest eine Schutzeinrichtung 30 ausgeblasen wird. Mit anderen Worten kann über die zumindest eine Schutzeinrichtung 30 und somit über den Lufteinlassbereich 31 auch Luft L aus dem Innenraum 2 in die Umgebung U abgeführt werden.

Es ist zusätzlich oder alternativ möglich, dass der Luftstrom LS passiv generiert wird, beispielsweise durch ein sich bewegendes Fahrzeug, an welchem der Transportbehälter 1 in einer exponierten Lage montiert ist und welches von Luft L der Umgebung U umströmt wird.

Der Lufteinlassbereich 31 ist ferner konfiguriert, dass Medium M, insbesondere das flüssige, flüssig tropfenförmige und/oder das flüssig partikelhaltige Medium M von dem Luftstrom LS im Wesentlichen abzuscheiden und insbesondere das abgeschiedene Medium M an der zumindest einen Schutzeinrichtung 30 in einer definierten Richtung zu führen.

Die zumindest eine Schutzeinrichtung 30 ist einerseits vor allem zur Ableitung von Spritzwasser, Gischt und Schnee konfiguriert. Darüber hinaus kann das Eindringen von Medien M in Form von Dispersionsmedien, insbesondere in Form von Suspensionen als heterogene Stoffgemische mit ungelösten Feststoffpartikeln in einem flüssigen Medium, infolge Abscheidung an der zumindest einen Schutzeinrichtung 30 im Wesentlichen verhindert oder zumindest signifikant und/oder vernachlässigbar reduziert werden.

Der Lufteinlassbereich 31 ist vollständig umlaufend ausgebildet. Der Lufteinlassbereich 31 umfasst zumindest eine Einlassöffnung 32 und/oder bildet mit der Behälterwand 11 zumindest eine Einlassöffnung 32. Die zumindest eine Einlassöffnung 32 kann schlitzförmig und somit als Schlitz, oder spaltförmig und somit als Spalt ausgebildet sein, insbesondere mit einer im Wesentlichen konstanten Schlitzbreite oder mit einer im Wesentlichen konstanten Spaltbreite. Die zumindest eine Einlassöffnung 32 kann beispielsweise nach der Norm IEC 60335-1 konfiguriert sein und/oder zumindest darauf basieren. Eine Schlitzbreite oder eine Spaltbreite kann beispielsweise in einem Bereich zwischen 3,2 mm und 6,4 mm liegen.

Der Lufteinlassbereich 31 kann in Form eines Labyrinths ausgebildet sein, welches sich in der Umfangsrichtung U30 und die zumindest eine Behälteröffnung 20 herum erstreckt, um den Luftstrom LS abschnittsweise zumindest einmal im Wesentlichen parallel zu der Behälterwand 11 und/oder abschnittsweise zumindest einmal im Wesentlichen senkrecht zu der Behälterwand 11 zu führen. Dadurch wird beispielsweise eine Umlenkung des Luftstroms LS mit einer damit einhergehenden Änderung der Strömungsrichtung SR realisiert, mittels welcher die Funktion der Abscheidung verbessert werden kann.

Der Lufteinlassbereich 31 umfasst zur Beeinflussung des Luftstroms LS in Form einer Umlenkung zumindest eine erste Kante 321 und zumindest eine zweite Kante 311, welche jeweils durch zwei aneinander angrenzende Flächen ausgebildet wird. Die zumindest eine erste Kante 321 ist dem Abschirmelement 320 zugeordnet und/oder an dem Abschirmelement 320, das heißt an der zumindest einen Abdeckleiste 323 ausgebildet, und die zumindest eine zweite Kante 311 ist dem Rahmenelement 310 zugeordnet und/oder an dem Rahmenelement 310 ausgebildet.

Die zumindest eine erste Kante 321 und die zumindest eine zweite Kante 311 sind, insbesondere in der Strömungsrichtung SR des Luftstroms LS, voneinander beabstandet und zueinander versetzt angeordnet und in unterschiedlichen Lagen und somit unterschiedlichen Ausrichtungen zueinander angeordnet, um einen definierten Strömungsweg und somit eine definierte Strömungsrichtung SR für den Luftstrom LS vorzugeben. Wie sich aus der Schnittansicht in Figur 1 ergibt, bilden in einer Querschnittsansicht die zumindest eine erste Kante 321 und die zumindest eine zweite Kante 311 eine (resultierende) Z-förmige Umlenkung des Luftstroms LS.

Durch den Luftstrom LS wird in dem Luftstrom LS enthaltenes Medium M zumindest an der zumindest einen ersten Kante 321 im Wesentlichen abgeschieden und abgeleitet, sodass im weiteren Verlauf der Strömungsrichtung SR im Wesentlichen nur noch der Luftstrom LS zu der zumindest einen Behälteröffnung 20 geführt wird. Bei entsprechenden Strömungsverhältnissen und/oder Ausbildungen der zumindest einen ersten Kante 321 und der zumindest einen zweiten Kante 311 kann auch die zumindest eine zweite Kante 311 zur Abscheidung eines Mediums M von dem Luftstrom LS beitragen. Die zumindest eine erste Kante 321 ist somit eine Abscheidekante für das Medium M. Zusätzlich kann die zumindest eine zweite Kante 311 eine Abscheidekante sein.

Sowohl die zumindest eine erste Kante 321 als auch die zumindest eine zweite Kante 311 können jeweils durch einen Kantenwinkel α gekennzeichnet sein, welcher kleiner oder gleich als circa 110 Grad ist. Bei dem dargestellten Ausführungsbeispiel des Transportbehälters 1 in Figur 1 ist der resultierende Kantenwinkel α im Wesentlichen circa 90 Grad.

Anzumerken ist, dass der Ableitabschnitt 33 für den Luftstrom LS strömungstechnisch mehr oder weniger ein Ruhegebiet und/oder ein Zirkulationsgebiet bildet, bei welchem eine resultierende Strömungsgeschwindigkeit des Luftstroms LS zumindest in der Strömungsrichtung SR vergleichsweise gering ist.

Um den Abscheideeffekt oder die Abscheidefunktion weiter zu verbessern, kann der Lufteinlassbereich 31 in der Strömungsrichtung SR des Luftstroms LS abschnittsweise düsenförmig ausgebildet sein, um den Luftstrom LS zu der zumindest einen Behälteröffnung 20 zu beschleunigen und/oder um den Luftstrom LS zu der zumindest einen Behälteröffnung 20 abzubremsen. Mit anderen Worten kann sich ein resultierender Strömungsquerschnitt des Lufteinlassbereichs 31 für den Luftstrom LS vergrößern und/oder verkleinern, um jeweilige Strömungseffekte und eine damit einhergehende Abscheidefunktion zur Abscheidung eines Mediums M aus dem Luftstrom LS zu verbessern.

Wie sich aus der Darstellung in Figur 1 ferner ergibt, umfasst die Abdeckleiste 323 (und die weiteren Abdeckleisten 324, 325 und 326) ferner die außenliegende Kante 322, welche zu der zumindest einen ersten Kante 321 als Abscheidekante gegenüberliegend angeordnet ist. Die außenliegende Kante 322 trägt als Begrenzungskante des Abschirmelements 320 zur Außenkontur des Abschirmelements 320 bei.

Das Rahmenelement 310 ist durch die Durchgangsöffnung 34 gekennzeichnet, welche über einen Absatz 35 in die zumindest eine Behälteröffnung 20 übergeht. Der Querschnitt der Durchgangsöffnung 34 kann zu dem Querschnitt der zumindest einen Behälteröffnung 20 im Wesentlichen identisch ausgebildet sein und daher bei dem vorliegenden Ausführungsbeispiel im Wesentlichen kreisförmig.

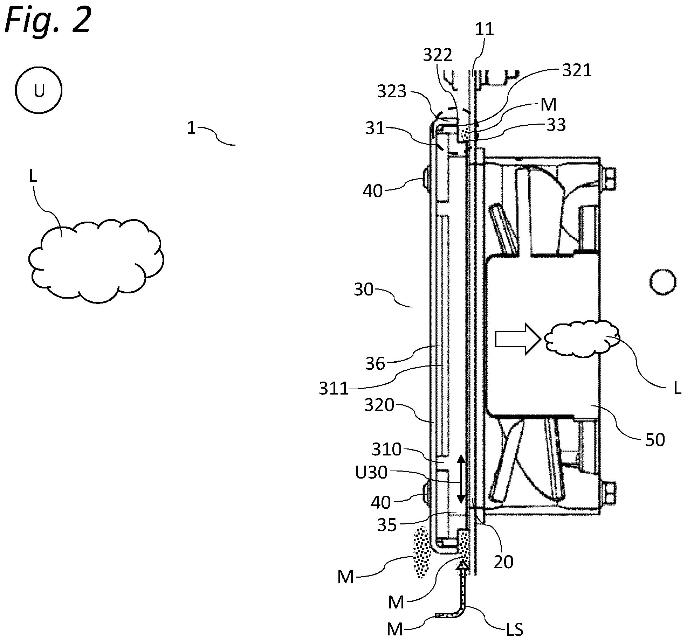

Figur 2 zeigt einen weiteren Ausschnitt (teilweise Schnittansicht) des ersten Ausführungsbeispiels des Transportbehälters 1 gemäß der vorliegenden Erfindung.

Das Rahmenelement 310 ist zur unmittelbaren (direkten) Montage an die Behälterwand 11 ausgebildet. Das Abschirmelement 320 ist zur unmittelbaren (direkten) Montage an das Rahmenelement 320 ausgebildet. Die zumindest eine Schutzeinrichtung 30 kann beispielsweise mittels zumindest einer Schraubverbindung 40 mit zumindest einer Schraube an der Behälterwand 11 befestigt werden. Alternativ sind andere Verbindungsarten, beispielsweise im Wesentlichen formschlüssige und/oder im Wesentlichen kraftschlüssige Verbindungen in Form von Rastverbindungen oder Steckverbindungen, zur Befestigung der zumindest einen Schutzeinrichtung 30 an der Behälterwand 11 denkbar.

In Figur 2 ist ein Durchflussschacht 36 von vier Durchflussschächten 36, 37, 38, 39 für den Luftstrom LS der zumindest einen Schutzeinrichtung 30 erkennbar, welcher in der Umfangsrichtung U30 um die Durchgangsöffnung 34 angeordnet ist und in die Durchgangsöffnung 34 mündet. Der Durchflussschacht 36 wird in der Strömungsrichtung SR insbesondere nach der entsprechenden zumindest einen zweiten Kante 311 durch das Rahmenelement 310 und das Abschirmelement 320 ausgebildet.

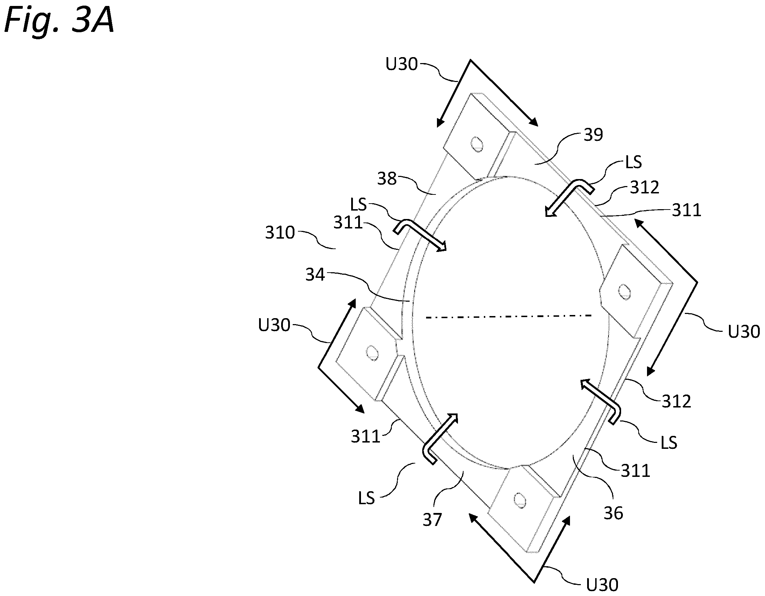

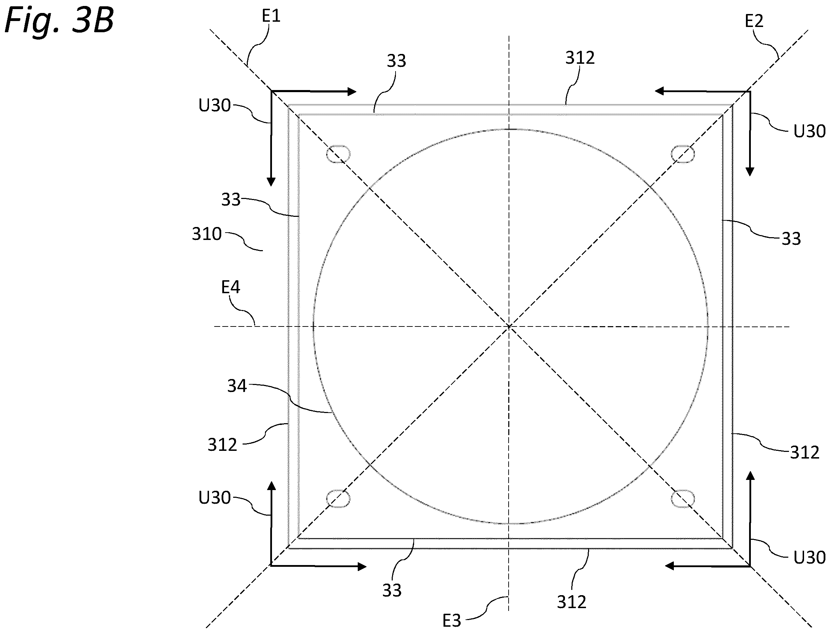

Figur 3A zeigt in einer ersten perspektivischen Ansicht das Rahmenelement 310 der zumindest einen Schutzeinrichtung 30 des ersten Ausführungsbeispiels des Transportbehälters 1 als Tragstruktur für das Abschirmelement 320. Figur 3B zeigt das Rahmenelement 310 aus Figur 3A in einer Vorderansicht (Hauptansicht).

Das Rahmenelement 310 ist abschnittsweise ringförmig oder abschnittsweise ringscheibenförmig mit jeweils einer Durchgangsöffnung 34 ausgebildet. Das Rahmenelement 310 ist insgesamt gesehen im Wesentlichen flach und dient zum Tragen des Abschirmelements 320 sowie zur Anbindung, das heißt Montage an die Behälterwand 11.

Mit den Bezugszeichen 36, 37, 38, 39 sind in der Darstellung Flächen des Rahmenelements 310 gekennzeichnet, welche zusammen mit dem Abschirmelement 320, das heißt mit der Innenfläche des Abschirmelements 320 in einem Montagezustand einen jeweiligen Durchflussschacht 36, 37, 38, 39 für den Luftstrom LS hin zu der Durchgangsöffnung 34 bilden.

In Figur 3A gut erkennbar ist die zumindest eine zweite Kante 311, welche sich in der Umfangsrichtung U30 abschnittsweise erstreckt.

Das Rahmenelement 310 umfasst vier Montagesockel mit Durchgangsbohrungen für das Abschirmelement 320, welche in der Umfangsrichtung U30 angeordnet sind. Die Montagesockel sind aus Gründen der Übersichtlichkeit nicht näher gekennzeichnet.

Aus der Darstellung in Figur 3B sowie aus der Zusammenschau der Figuren 3A und 3B ergibt sich, dass das Rahmenelement 310 - abgesehen von der Ausbildung und/oder Anordnung von Durchgangsbohrungen für Schraubverbindungen 40 - zu zumindest einer Ebene E1, E2, E3, E4, insbesondere zu vier Ebenen E1, E2, E3, E4, im Wesentlichen spiegelsymmetrisch ausgebildet ist.

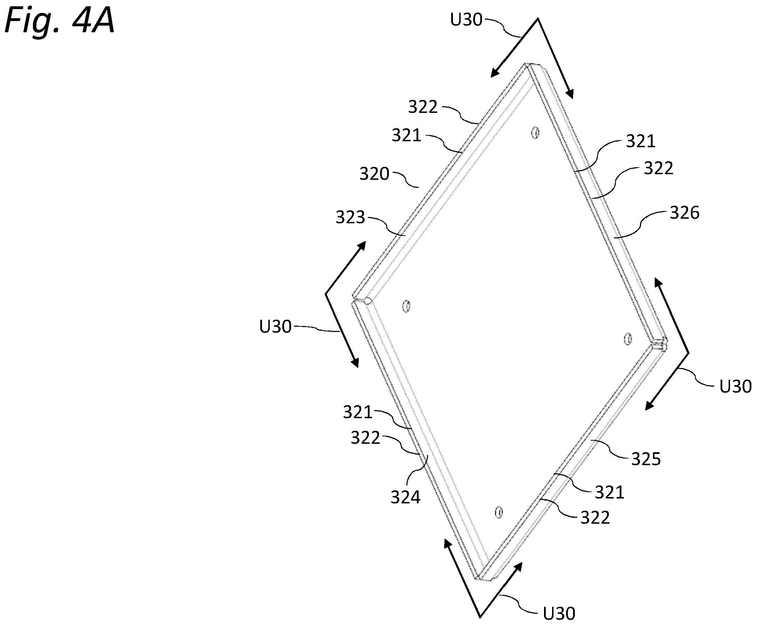

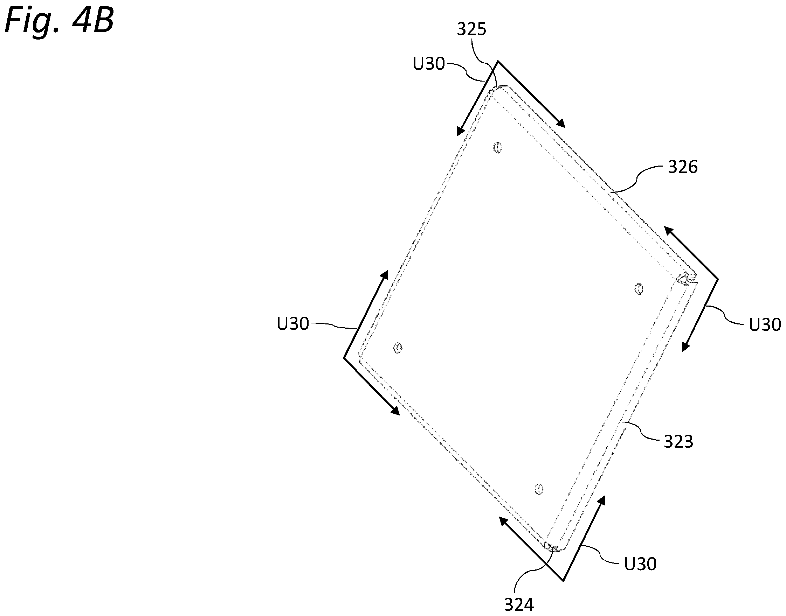

Figur 4A zeigt das Abschirmelement 320 der zumindest einen Schutzeinrichtung 30 des ersten Ausführungsbeispiels des Transportbehälters 1 in einer ersten perspektivischen Ansicht und Figur 4B zeigt das Abschirmelement 320 aus Figur 4A in einer zweiten perspektivischen Ansicht.

In Figur 4A ist die Innenfläche als im Wesentlichen ebene Fläche des Abschirmelements 320 erkennbar, welche in dem Montagezustand zu der zumindest einen Behälteröffnung 20 gerichtet ist und/oder dieser zumindest abschnittsweise gegenüberliegt. In Figur 4B ist wiederum die im Wesentlichen ebene Außenfläche des Abschirmelements 320 erkennbar. Ferner sind die in der Umfangrichtung U30 sich erstreckenden Abdeckleisten 324, 324, 325, 326 erkennbar, welche beispielsweise durch einen jeweiligen Bördelvorgang hergestellt sein können.

Das Abschirmelement 320 ist zur Begrenzung des Lufteinlassbereichs 31 im Wesentlichen flach und schalenförmig, oder im Wesentlichen flach und wannenförmig ausgebildet.

Das Abschirmelement 320 und/oder das Rahmenelement 310, oder die zumindest eine Schutzeinrichtung 30 als Einzelteil kann beispielsweise durch zumindest einen Spritzvorgang, durch zumindest einen Gießvorgang, durch zumindest einen Sintervorgang und/oder durch zumindest einen 3D-Druckvorgang hergestellt sein.

Es ist ferner möglich, zumindest ein Filterelement in dem Lufteinlassbereich 31 zu integrieren, um beispielsweise einen erweiterten Schutz gegen ein Medium M in von Form von Staub zu realisieren.

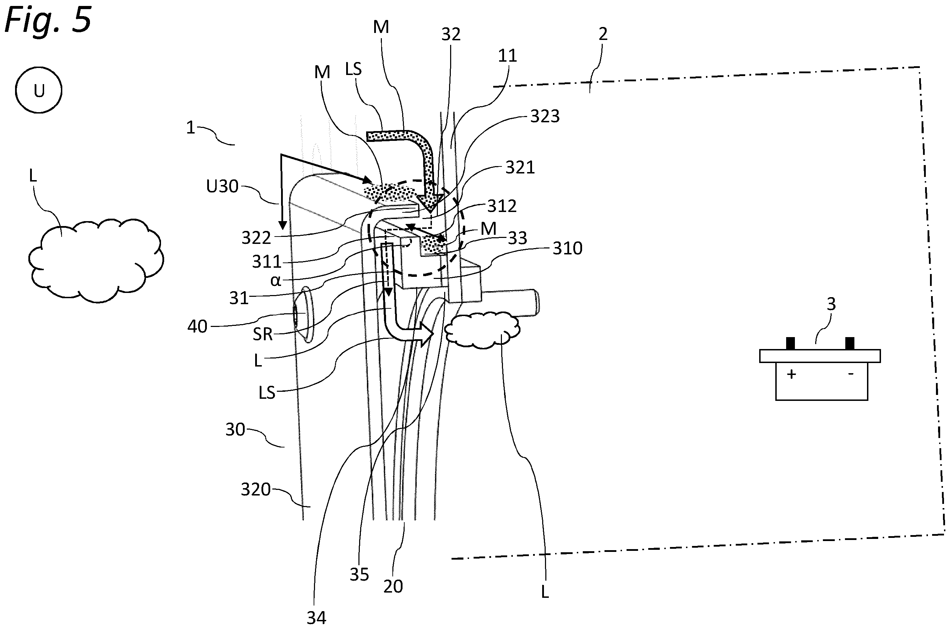

Figur 5 zeigt den Ausschnitt des Transportbehälters 1 aus Figur 1, wobei die im Innenraum 2 des Transportbehälters 1 an der zumindest einen Behälteröffnung 20 angeordnete Strömungsmaschine 50 ausgeblendet ist.

Der Transportbehälter 1 kann in Bezug auf die Strömungsmaschine 50 und/oder deren Anordnung in dem Innenraum 2 unterschiedlich konfiguriert sein. Bei dem ersten Ausführungsbeispiel des Transportbehälters 1 kann, wie in Figur 1 gezeigt, die Strömungsmaschine 50 an der zumindest einen Behälteröffnung 20 angeordnet sein. Alternativ ist beispielsweise eine Anordnung der Strömungsmaschine 50 in dem Innenraum 2 möglich, wonach die Strömungsmaschine 50 zu der zumindest einen Behälteröffnung 20 beabstandet ist.

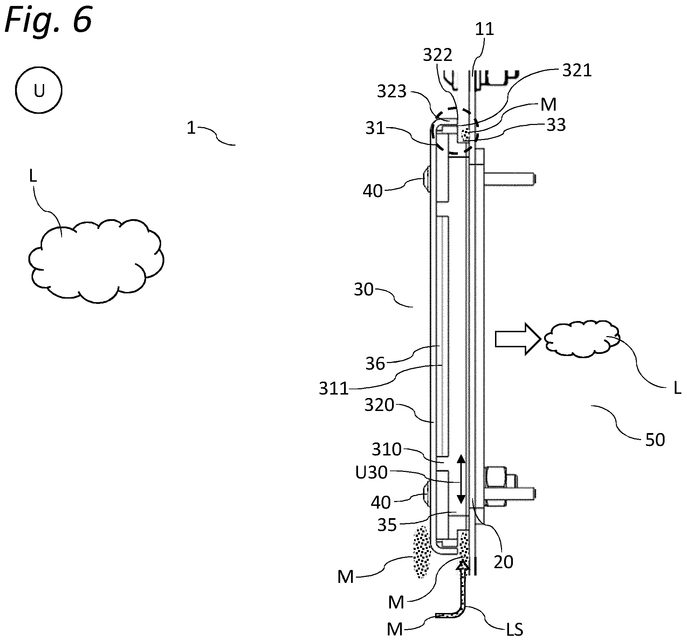

Figur 6 zeigt den Ausschnitt aus Figur 2, wobei die im Innenraum 2 des Transportbehälters 1 an der zumindest einen Behälteröffnung 20 angeordnete Strömungsmaschine 40 ausgeblendet ist.

Anhand von Figur 6 wird nochmals deutlich, dass die zumindest eine Schutzeinrichtung 30 durch eine vergleichsweise niedrige Bauhöhe gekennzeichnet ist, sodass die Außenseite der

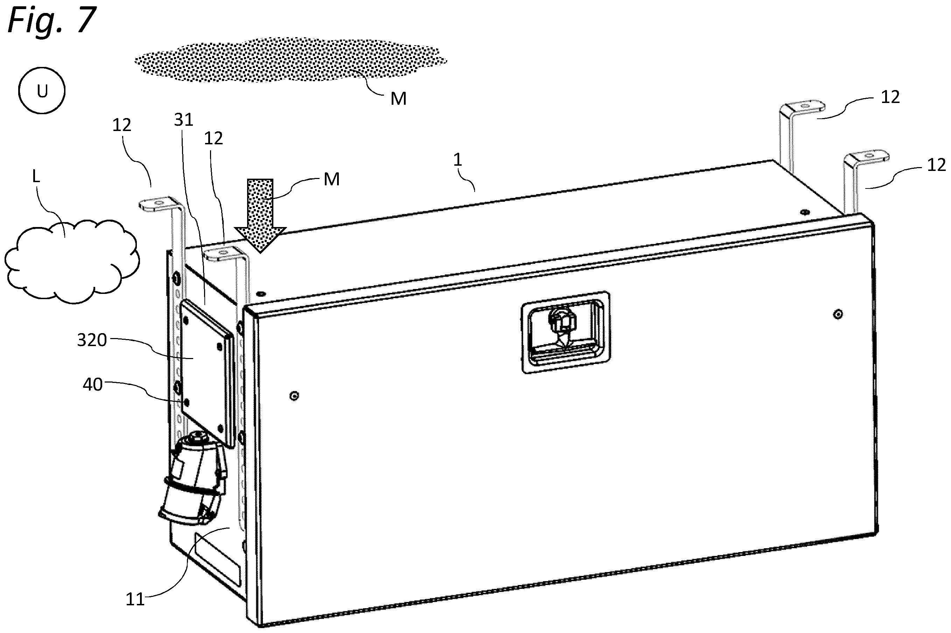

Behälterwand 11 insgesamt keinen nennenswerten Einfluss auf die Abmessungen des Transportbehälters 1 hat, was beispielsweise auch anhand der Darstellung in Figur 7 hervorgeht.

Figur 7 zeigt den Transportbehälter 1 gemäß dem ersten Ausführungsbeispiel in einer perspektivischen Ansicht.

Der Transportbehälter 1 ist vor allem zur Aufnahme und/oder zum Transport von elektrischen Komponenten als Transportgut 3 konfiguriert. Die elektrischen Komponenten können vor allem Ladegeräte und/oder Akkumulatoren und/oder sonstige elektrische Geräte entsprechender Abmessungen sein. Der Transportbehälter 1 ist im Wesentlichen quaderförmig ausgebildet und mittels einer Behälterwand in Form eines Deckels verschließbar, beispielsweise mittels zumindest einer Schraubverbindung und/oder mittels zumindest einer Rastverbindung.

Wie sich aus der Darstellung in Figur 7 ergibt, kann der Transportbehälter 1 zur Montage an einen Rahmen eines Nutzfahrzeugs konfiguriert sein und hierzu beispielsweise vier Montageleisten 12 umfassen. Die Montageleisten 12 können an jeweils zwei zueinander gegenüberliegenden, beabstandeten Behälterwänden 11 befestigt sein und jeweils einen abgewinkelten Montageabschnitt zur Befestigung des Transportbehälters 1 an dem Rahmen umfassen.

Mit der vorliegenden Erfindung kann ein Transportbehälter 1 bereitgestellt werden, welcher vor allem Spritzwasserschutz unabhängig von der Lage des Transportbehälters 1 gewährleistet. Der Transportbehälter 1 kann somit auch in besonders exponierten Lagen, wie beispielsweise auf einer Ladepritsche eines Pritschenwagens, eingesetzt werden und dennoch einen effektiven Schutz des Transportguts 3 gegen schädliche Medien M bieten.

Die vorliegende Erfindung ist nicht auf das vorstehend beschriebene Ausführungsbeispiel beschränkt. Vielmehr ist eine Vielzahl von Varianten und Abwandlungen möglich, die ebenfalls von dem Erfindungsgedanken Gebrauch machen und deshalb in den Schutzbereich fallen. Insbesondere beansprucht die vorliegende Erfindung auch Schutz für den Gegenstand und die Merkmale der Unteransprüche unabhängig von den in Bezug genommenen Ansprüchen.

### Bezugszeichenliste

- 1: Transportbehälter
- 2: Innenraum
- 3: Transportgut
- 11: Behälterwand
- 12: Montageleiste
- 20: Behälteröffnung
- 30: Schutzeinrichtung
- 31: Lufteinlassbereich
- 32: Einlassöffnung
- 33: Ableitabschnitt
- 34: Durchgangsöffnung
- 35: Absatz
- 36: Durchflussschacht
- 37: Durchflussschacht
- 38: Durchflussschacht
- 39: Durchflussschacht
- 40: Schraubverbindung
- 50: Strömungsmaschine
- 310: Rahmenelement
- 311: Kante
- 312: Kante
- 320: Abschirmelement
- 321: Kante
- 322: Kante
- 323: Abdeckleiste
- 324: Abdeckleiste
- 325: Abdeckleiste
- 326: Abdeckleiste

- E1: Ebene
- E2: Ebene
- E3: Ebene
- E4: Ebene
- L: Luft
- LS: Luftstrom
- M: Medium
- SR: Strömungsrichtung
- U: Umgebung
- U30: Umfangsrichtung

- α: Kantenwinkel

## Patentansprüche

1. Transportbehälter (1) mit einem Innenraum (2) zur Aufnahme eines Transportguts (3), umfassend:
• eine Behälterwand (11) mit zumindest einer Behälteröffnung (20) zur Versorgung des Innenraums (2) mit Luft (L) einer Umgebung (U);
• zumindest eine Schutzeinrichtung (30) zur Abschirmung der zumindest einen Behälteröffnung (20) gegen ein Medium (M) der Umgebung (U), welches insbesondere flüssig, flüssig tropfenförmig, flüssig partikelhaltig und/oder kristallförmig ist;
wobei die zumindest eine Schutzeinrichtung (30) einen Lufteinlassbereich (31) zur Beeinflussung eines Luftstroms (LS) der Luft (L) zu der zumindest einen Behälteröffnung (20) umfasst,
wobei sich der Lufteinlassbereich (31) in einer Umfangsrichtung (U30) um die zumindest eine Behälteröffnung (20) herum erstreckt und konfiguriert ist, entlang der Umfangsrichtung (U30) das Medium (M) abzuleiten.

2. Transportbehälter (1) nach Anspruch 1,
wobei der Lufteinlassbereich (31) konfiguriert ist, das Medium (M), insbesondere das flüssig tropfenförmige und/oder flüssig partikelhaltige Medium (M), von dem Luftstrom (LS) abzuscheiden und insbesondere das abgeschiedene Medium (M) an der zumindest einen Schutzeinrichtung (30) in einer definierten Richtung zu führen.

3. Transportbehälter (1) nach Anspruch 1 oder 2,
wobei der Lufteinlassbereich (31) vollständig umlaufend ausgebildet ist; und/oder
wobei der Lufteinlassbereich (31) zumindest eine Einlassöffnung (32) umfasst und/oder mit der Behälterwand (11) ausbildet, wobei die zumindest eine Einlassöffnung (32) schlitzförmig oder spaltförmig ausgebildet ist, insbesondere mit einer konstanten Schlitzbreite oder Spaltbreite.

4. Transportbehälter (1) nach einem der vorhergehenden Ansprüche,
wobei der Lufteinlassbereich (31) in Form eines Labyrinths ausgebildet ist, welches sich in der Umfangsrichtung (U30) um die zumindest eine Behälteröffnung (20) herum erstreckt, um den Luftstrom (LS) abschnittsweise zumindest einmal parallel zu der Behälterwand (11) und/oder abschnittsweise zumindest einmal senkrecht zu der Behälterwand (11) zu führen.

5. Transportbehälter (1) nach einem der vorhergehenden Ansprüche,
wobei der Lufteinlassbereich (31) zur Umlenkung des Luftstroms (LS) zumindest eine erste Kante (321, 322) und zumindest eine zweite Kante (311, 312) umfasst, welche voneinander beabstandet und/oder zueinander gegenüberliegend und/oder zueinander versetzt beabstandet ausgebildet sind,
wobei insbesondere die zumindest eine erste Kante (321, 322) und/oder die zumindest eine zweite Kante (311, 312) jeweils als eine Kante ausgebildet ist, bei welchem ein jeweiliger Kantenwinkel (α) gleich oder kleiner als 110 Grad ist, und/oder
wobei insbesondere die zumindest eine erste Kante (321, 322) und die zumindest eine zweite Kante (311, 312) zueinander beabstandet und in unterschiedlichen Lagen zueinander angeordnet sind, um in einer Querschnittsansicht eine Z-förmige Umlenkung des Luftstroms (LS) zu bilden.

6. Transportbehälter (1) nach einem der vorhergehenden Ansprüche,
wobei der Lufteinlassbereich (31) in einer Strömungsrichtung (SR) des Luftstroms (LS) abschnittsweise düsenförmig ausgebildet ist, um den Luftstrom (LS) zu der zumindest einen Behälteröffnung (20) zu beschleunigen und/oder um den Luftstrom (LS) zu der zumindest einen Behälteröffnung (20) abzubremsen.

7. Transportbehälter (1) nach einem der vorhergehenden Ansprüche,
wobei der Lufteinlassbereich (31) einen Ableitabschnitt (33) für das Medium (M) umfasst, welcher teilweise an die Behälterwand (11) angrenzt und/oder welcher teilweise zu der Behälterwand (11) gegenüberliegend angeordnet ist, um das Medium (M) in einer definierten Richtung abzuführen,
wobei insbesondere der Ableitabschnitt (33) als eine umlaufende Kante, eine umlaufende Rinne, ein umlaufender Absatz, ein umlaufender Kanal, und/oder als ein umlaufender Schacht ausgebildet ist, und/oder jeweils zumindest eine/n solche/n umfasst.

8. Transportbehälter (1) nach einem der vorhergehenden Ansprüche,
wobei die zumindest eine Schutzeinrichtung (30) zur Montage an die Behälterwand (11) abschnittsweise ringförmig oder abschnittsweise ringscheibenförmig mit jeweils einer Durchgangsöffnung (34) ausgebildet ist,
wobei insbesondere in einer Strömungsrichtung (SR) des Luftstroms (LS) die Durchgangsöffnung (34) an die zumindest eine Behälteröffnung (20) bündig angrenzt oder über einen Absatz (35) in die zumindest eine Behälteröffnung (20) übergeht.

9. Transportbehälter (1) nach einem der vorhergehenden Ansprüche,
wobei die zumindest eine Schutzeinrichtung (30) zu zumindest einer Ebene symmetrisch ausgebildet ist.

10. Transportbehälter (1) nach einem der vorhergehenden Ansprüche,
wobei die zumindest eine Schutzeinrichtung (30) einteilig mit einem Rahmenteil und mit einem Abschirmteil oder zumindest zweiteilig mit einem Rahmenelement (310) und mit einem Abschirmelement (320) ausgebildet ist, wobei das Rahmenelement (310) und das Abschirmelement (320) jeweils als separate Einzelelemente ausgebildet sind,
wobei sich jeweils der Abschirmteil oder das Abschirmelement (320) beabstandet zu der Behälterwand (11) zumindest über das Rahmenteil oder über das Rahmenelement (310) erstreckt.

11. Transportbehälter (1) nach Anspruch 10,
wobei die zumindest eine Behälteröffnung (20) durch einen Querschnitt gekennzeichnet ist, und
wobei der Rahmenteil oder das Rahmenelement (310) jeweils eine Durchgangsöffnung (34) umfasst, welche zu dem Querschnitt der zumindest einen Behälteröffnung (20) identisch oder zumindest ähnlich ausgebildet ist.

12. Transportbehälter (1) nach Anspruch 10 oder 11,
wobei der Rahmenteil oder das Rahmenelement (310), und/oder wobei der Abschirmteil oder das Abschirmelement (320) jeweils abschnittsweise flach und/oder abschnittsweise plattenförmig ausgebildet ist; und/oder
wobei der Abschirmteil oder das Abschirmelement (320) zur Begrenzung des Lufteinlassbereichs (31) flach und schalenförmig, oder flach und wannenförmig ausgebildet ist.

13. Transportbehälter (1) nach einem der vorhergehenden Ansprüche 10 bis 12,
wobei der Rahmenteil oder das Rahmenelement (310) jeweils einen umlaufenden Ableitabschnitt (33) für das Medium (M) umfasst, und
wobei an dem Abschirmteil oder an dem Abschirmelement (320) jeweils in einer Umfangsrichtung (U30) zumindest eine Abdeckleiste (323, 324, 325, 326) angeordnet und/oder ausgebildet ist,
wobei die zumindest eine Abdeckleiste (323, 324, 325, 326) zu einer Seite des Ableitabschnitts (33) gegenüberliegend und/oder beabstandet angeordnet ist.

14. Transportbehälter (1) nach einem der vorhergehenden Ansprüche 11 bis 13,
wobei der Rahmenteil und der Abschirmteil, oder wobei das Rahmenelement (310) und das Abschirmelement (320) jeweils zusammen zumindest zwei Durchflussschächte (36, 37, 38, 39) für den Luftstrom (LS) ausbilden, welche in der Umfangsrichtung (U30) um die Durchgangsöffnung (34) herum angeordnet sind und in die Durchgangsöffnung (34) münden.

15. Transportbehälter (1) nach einem der vorhergehenden Ansprüche,
wobei das Transportgut (3) zumindest eine elektrische Komponente umfasst und/oder als zumindest eine solche ausgebildet ist,
wobei insbesondere das Transportgut (3) ein Ladegerät und/oder zumindest einen Akkumulator umfasst.
